# EUROPÄISCHE PATENTSCHRIFT

(11) **EP 0 894 809 B1**
(45) Veröffentlichungstag und Bekanntmachung des Hinweises auf die Patenterteilung: **16.02.2005**
(21) Anmeldenummer: 98113559.3
(22) Anmeldetag: 21.07.1998
(51) Int. Cl.: C08F 2/24

(54) **Verwendung von Kolloiddispersions-Mischungen als Schutzkolloid für die wassrige Emulsionspolymerisation**
Use of mixtures of colloidal dispersions als protective colloid in aqueous emulsion polymerisation
Usage des mélanges de dispersions colloidales comme colloide protecteur dans la polymérisation en émulsion aqueuse

(30) Priorität: 31.07.1997 DE 19733077
(43) Veröffentlichungstag der Anmeldung: 03.02.1999
(73) Patentinhaber: Celanese Emulsions GmbH, 61476 Kronberg/Ts. (DE)
(72) Erfinder: Cabrera, Ivan, Dr., 63303 Dreieich (DE)
(74) Vertreter: Ackermann, Joachim, Dr., Patentanwalt Dr. Ackermann

(56) Entgegenhaltungen:
- DE-A- 4 327 514

## Beschreibung

Die Erfindung betrifft die Verwendung von Kolloiddispersions-Mischungen aus einem wasserlöslichen Monomer und einem nicht-wasserlöslichen Comonomer als Schutzkolloid für die Emulsionspolymerisation in Wasser.

Schutzkolloide sind normalerweise wasserlösliche Polymerverbindungen, die man für die Durchführung einer Emulsionspolymerisation und anschließend zur Stabilisierung der feindispergierten Polymerteilchen einsetzt.

Typische Schutzkolloide sind z.B. Polyvinylalkohole oder Cellulosederivate, Schutzkolloide werden aufgrund ihrer Struktur bei der Emulsionspolymerisation z.T. mit in das entstehende Polymer eingebaut. Man spricht dabei von einer Pfropfpolymerisation. Dadurch sind die sogenannten schutzkolloidstabilisierten Dispersionen häufig deutlich stabiler gegenüber mechanischen Belastungen als bei sogenannten emulgatorstabilisierten Dispersionen.

Normalerweise verwendet man in wäßrigen Polymerdispersionen als Schutzkolloide sehr hydrophile Polymere wie Poly(vinyl alkohol), Poly(ethylen oxid) oder Poly(vinylpyrrolidon) (Gosh, S.; Krishnamuti, N. Paint & Ink International, Jan-Feb. 1996, 19). Andere synthetische Copolymere, die als Schutzkolloid auch verwendet worden sind, sind Poly(alkyl-Oxazoline) US-A-5,124,394 und Poly(N-vinylformamide) US-A-5,470,903. Wegen der starken Hydrophilie dieser Materialien sind Filme aus diesen Polymerdispersionen jedoch sehr wasserempfindlich. Diese Wasserempfindlichkeit schränkt die Einsatzgebiete von solchen Materialien stark ein. So können derartige Materialien nicht für Außenanwendungen verwendet werden, weil das Polymer durch den Witterungseinfluß sehr schnell abgebaut wird.

Ein großes Problem für praktische Anwendungen ist es deshalb, die richtige Balance in der Hydrophilie der Schutzkolloide zu erreichen, so daß einerseits die Emulsionspolymerisation gut durchführbar ist und andererseits die damit hergestellten Polymere die nötige Wasserbeständigkeit besitzen.

Schutzkolloide werden auch benutzt, um ganz bestimmte rheologische Eigenschaften von Dispersionen zu erreichen, z.B. eine bestimmte Fließgrenze. Diese rheologischen Eigenschaften sind sehr wichtig, wenn z.B. solche Copolymerdispersionen als Komponenten für Kunstharzputze verwendet werden.

Aus der DE-A-43 27 514 sind wässrige Copolymerisatdispersionen zum Einsatz bei der Herstellung von Lacken, Anstrichfarben und Klebstoffen, als Filmbildner in haarkosmetischen Zubereitungen, als Mittel zum Schutz vor ultravioletten Licht sowie als Träger für Inhaltsstoffe in pharmazeutischen, kosmetischen oder agrochemischen Zubereitungen beschrieben. Eine Verwendung dieser Copolymerisatdispersionen als Schutzkolloid für die Emulsionspolymerisation bzw. ein Verfahren zur Herstellung von Polyvinylestern ist aus diesem Dokument nicht abzuleiten.

Die Aufgabe der vorliegenden Erfindung bestand darin, neue Schutzkolloide sowie ein Verfahren zur Emulsionspolymerisation bereitzustellen, die die Herstellung von mechanisch stabilen Copolymerdispersionen mit besonderen rheologischen Eigenschaften erlauben.

Die Aufgabe wurde gelöst durch den Einsatz einer Kolloiddispersionsmischung, erhalten durch Copolymerisation eines wasserlöslichen Monomers mit einem nicht wasserlöslichen Comonomer in Gegenwart eines micellenbildenden Emulgators als Schutzkolloid bei der Emulsionspolymerisation.

Überraschenderweise wurde gefunden, daß in Anwesenheit eines Emulgators, der Micellen bildet, die Copolymerisation von einem wasserlöslichen Monomer mit einem nicht wasserlöslichen Comonomer zu Kolloiddispersionsmischungen des Copolymers führt, die sich sehr gut als Schutzkolloide für die Herstellung von z.B. Copolymerdispersionen aus Vinylacetat eignen.

Emulgatoren stabilisieren die feindispersen Polymerteilchen, welche durch die Emulsionspolymerisation erzeugt werden. Bei den Emulgatoren handelt es sich üblicherweise um oberflächenaktive Stoffe bzw. Tenside. Tenside verfügen über einen charakteristischen Aufbau und weisen mindestens eine hydrophile und eine hydrophobe funktionelle Gruppe auf. Durch diesen Aufbau können sich Tenside an der Grenzfläche zwischen Polymer- und Wasserphase anreichern und durch sterische bzw. elektrostatische Effekte ein Verschmelzen der feindispergierten Polymerteilchen verhindern. Ist der hydrophile Teil elektrisch ungeladen, spricht man von einem nichtionischen Emulgator, besitzt er negative Ladung, so nennt man ihn einen anionischen Emulgator, und sind positive Ladungen vorhanden, hat man es mit einem kationischen Emulgator zu tun. Gibt man Tenside in Wasser, bilden sich bei Überschreitung einer bestimmten Konzentration Kugelmicellen aus. Diese Eigenschaft von Tensiden hat eine große Bedeutung für die Durchführung der Emulsionspolymerisation. Diese sogenannte kritische Micellenkonzentration (KMK) ist stoffspezifisch für jedes Tensid. Erhöht man die Konzentration in Wasser deutlich oberhalb der KMK, ändert sich das Aggregationsverhalten der Tenside und es werden z.B. gestreckte Micellen (Stabmicellen) gebildet. Als Emulgatoren für die hier beschriebene Erfindung eignen sich sowohl nichtionische wie auch ionische Emulgatoren. Beispiele hierfür sind Alkylarylpolyglykolether und Alkylpolyglykolether mit jeweils 3 bis 50 mol Ethylenoxid-Einheiten, Blockcopolymere des Ethylenoxids mit Propylenoxid, Alkyl- oder Alkylarylsulfonate, Alkylsulfate, Alkyl- und Arylethersulfate und -phosphate mit jeweils vorzugsweise 8 bis 18 KohlenstoffAtomen im lipophilen und bis zu 50 Ethylenoxid- oder Propylenoxid-Einheiten im hydrophilen Teil sowie Mono- oder Diester der Sulfobernsteinsäure oder Alkylphenole mit jeweils vorzugsweise 8 bis 18 Kohlenstoffatomen im Alkylrest.

Vorzugsweise werden nichtionische Emulgatoren und Mischungen von ionischen mit nichtionischen Emulgatoren eingesetzt.

Als wasserlösliche Monomere werden vorzugsweise N-Methyl-N-Vinylacetamid, N-Vinylpyrrolidon oder N-Vinylformamid, als nichtwasserlösliche Comonomere unsubstituierte oder alpha-substituierte Ester der Acrylsäure eingesetzt. Bevorzugt sind die Alkylester der Acryl- oder Methacrylsäure, insbesondere die C₄ bis C₈ Alkylester, wie Butyl oder Ethylhexylester. Es können auch Gemische der Acrylester eingesetzt werden oder andere Monomere, wie z.B. Ester der Maleinsäure, bevorzugt Dioctylmaleinat.

Die Copolymerisation wird als radikalische Polymerisation bei Temperaturen von 15 bis 100°C, insbesondere 60 bis 90°C durchgeführt, als Radikalinitiator können sowohl wasserunlösliche Verbindungen wie 2,2'-Azo-bis-isobutyronitril oder 2,2'-Azobis(2-methylbutyronitril) oder wasserlösliche wie 2,2'-Azo-bis(2-amidinopropan) dihydrochlorid eingesetzt werden.

Gegenstand der Erfindung ist die Verwendung der oben definierten Kolloiddispersionsmischung als Schutzkolloid für die Emulsionspolymerisation.

Als Monomere zum Einsatz in der Emulsionspolymerisation zur Herstellung von homo- oder copolymeren Polyvinylestern kommen Vinylformiat, Vinylacetat, Vinylpropionat, Vinylisobutyrat, Vinylpivalat, Vinyl-2-ethylhexanoat, Vinylester von gesättigten, verzweigten Monocarbonsäuren mit 9 bis 10 Kohlenstoffatomen im Säurerest, Vinylester von längerkettigen, gesättigten oder ungesättigten Fettsäuren, wie beispielsweise Vinyllaurat, Vinylstearat sowie Vinylester der Benzoesäure und substituierter Derivate der Benzoesäure wie Vinyl-p-tert.-butylbenzoat in Frage.

Unter diesen ist jedoch Vinylacetat besonders bevorzugt. Die genannten Vinylester können im Polyvinylester auch nebeneinander vorliegen. Der Anteil dieser Vinylester im Polymerisat beträgt mindestens 50 Gew.-%, vorzugsweise mindestens 75 Gew.-%.

Weitere ethylenisch ungesättigte Monomere, die mit den Vinylestern copolymerisiert werden können, sind α,β-ungesättigte Säuren, beispielsweise Acrylsäure, Methacrylsäure, sowie deren Ester mit primären und sekundären gesättigten einwertigen Alkoholen mit 1 bis 18 Kohlenstoffatomen, beispielsweise Methanol, Ethanol, Propanol, Butanol, 2-Ethylhexylalkohol, cycloaliphatischen Alkoholen sowie längerkettigen Fettalkoholen. Weiterhin können α,β-ungesättigte Dicarbonsäuren, beispielsweise Maleinsäure, Fumarsäure, Itaconsäure oder Citraconsäure, sowie deren Mono- oder Diester mit gesättigten einwertigen aliphatischen Alkoholen mit 1 bis 18 Kohlenstoffatomen mitverwertet werden. Der Anteil dieser Comonomere an der Gesamtmonomerenmenge beträgt bis zu 25 Gew.-%, vorzugsweise 15 Gew.-%.

Geeignete Comonomere sind weiterhin ethylenisch ungesättigte Kohlenwasserstoffe, wie Ethylen oder α-Olefine mit 3 bis 18 Kohlenstoffatomen, beispielsweise Propylen, Butylen, ferner Styrol, Vinyltoluol, Vinylxylol sowie halogenierte ungesättigte aliphatische Kohlenwasserstoffe, beispielsweise Vinylchlorid, Vinylfluorid, Vinylidenchlorid, Vinylidenfluorid. Der Anteil dieser Comonomere an der Gesamtmonomerenmenge beträgt bis zu 50 Gew.-%, vorzugsweise bis zu 25 Gew.-%.

Weiterhin können mehrfach ethylenisch ungesättigte Monomere, beispielsweise Diallylphthalat, Diallylmaleinat, Triallylcyanurat, Tetraallyloxyethan, Divinylbenzol, Butandiol-1,4-dimethacrylat, Triethylenglykoldimethacrylat, Divinyladipat, Allyl(meth) acrylat, Vinylcrotonat, Methylenbisacrylamid, Hexandioldiacrylat, Pentaerythritoldiacrylat und Trimethylolpropantriacrylat im Polymerisat enthalten sein. Der Anteil dieser Comonomere an der Gesamtmonomerenmenge beträgt bis zu 10 Gew.-%, vorzugsweise bis zu 2 Gew.-%.

Besonders geeignet sind stickstoffhaltige Comonomere mit N-funktionellen Gruppen, darunter insbesondere (Meth)acrylamid, Allylcarbamat, Acrylnitril, N-Methylol(meth)acrylamid, N-Methylolallylcarbamat sowie die N-Methylolester, N-Methylolalkylether oder Mannichbasen des N-Methylol(meth)acrylamids oder N-Methylolallylcarbamats, Acrylamidoglykolsäure, Acrylamidomethoxyessigsäuremethylester, N-(2,2-Dimethoxy-1-hydroxyethyl)-acrylamid, N-Dimethylaminopropyl-(meth)acrylamid, N-Methyl(meth)acrylamid, N-Butyl(meth)acrylamid, N-Cyclohexyl (meth)acrylamid, N-Dodecyl(meth)acrylamid, N-Benzyl(meth)acrylamid, p-Hydroxyphenyl(meth)acrylamid, N-(3-Hydroxy-2,2-dimethylpropyl)methacrylamid, Ethylimidazolidonmethacrylat, N-Vinylformamid, N-Vinyl-2-pyrrolidon. Der Anteil dieser Comonomere an der Gesamtmonomerenmenge beträgt bis zu 15 Gew.-%, vorzugsweise bis zu 10 Gew-%.

Weiterhin besonders geeignete Comonomere sind hydroxyfunktionelle Monomere wie Hydroxyethyl(meth)acrylat, Hydroxypropyl(meth)acrylat sowie deren Addukte mit Ethylenoxid oder Propylenoxid. Der Anteil dieser Comonomeren an der Gesamtmonomerenmenge beträgt bis zu 25 Gew.-%, vorzugsweise bis zu 15 Gew.-%.

Auch geeignet sind ferner Comonomere aus der Gruppe Diacetonacrylamid, Allylacetoacetat, Vinylacetoacetat sowie Acetoacetoxyethyl(meth)acrylat. Der Anteil dieser Comonomere an der Gesamtmonomerenmenge beträgt bis zu 10 Gew.-%, vorzugsweise bis zu 5 Gew.-%.

Das erfindungsgemäß eingesetzte Schutzkolloid erlaubt die Herstellung von mechanisch stabilen Copolymerdispersionen mit hohen Viskositäten im unteren Scherbereich (D = 0,05 - 1 s⁻¹) und einem ausgeprägten Fließpunkt (Fließgrenze). Die Fließgrenze ist die Schubspannung, unterhalb der sich eine Substanz wie ein Festkörper verhält. Dies bedeutet, daß die Einwirkung einer Schubspannung, die kleiner als die Fließgrenze ist, zu keiner permanenten Deformation oder nur zu einer vernachlässigbar kleinen Kriechbewegung führt. Die Fließgrenze ist eine wichtige Eigenschaft vieler disperser Systeme, wie z.B. Beschichtungen, Lebensmittel und pharmazeutische Produkte. Die Fließgrenze bestimmt, ob z.B. ein Lack eine glatte Oberfläche bildet, ob Zahnpasta von der Bürste tropft oder ob sich ein Material pumpen läßt und vieles mehr. Diese Eigenschaften einer Dispersion können auf verschiedenen Wegen erzielt werden, z.B. kann die sogenannte Fließgrenze durch Erhöhung der Konzentration des Schutzkolloids oder durch Variation des Acrylester-Comonomers erhöht werden. Der Anteil des Schutzkolloids kann innerhalb eines weiten Bereiches liegen. So kann der Anteil des Schutzkolloids von 0,05 bis 10 Gew.-% betragen, der bevorzugte Anteil liegt zwischen 0,5 und 5 Gew.-%.

Die nachstehend beschriebenen Beispiele illustrieren die Erfindung, sollen aber keine Einschränkung bewirken. Prozentangaben sind immer Gewichtsprozente.

### Beispiel 1

### Herstellung eines Schutzkolloids aus N-Vinylpyrrolidon und 2-Ethylhexylacrylat

1,6 g Natriumcarbonat und 23 g Emulsogen EPN 287 (Fettalkoholpolyglykolether, Clariant) werden in 497 g E-Wasser gelöst. Die Lösung wird auf 80°C erhitzt. Bei dieser Temperatur wird eine Mischung von 300 g Vinylpyrrolidon und 100 g 2-Ethylhexylacrylat über 180 Minuten dosiert. Parallel dazu dosiert man eine Lösung von 2 g Azo-bis-isobutyronitril in N-Vinyl-2-pyrrolidon. Nach Beendigung der Monomerdosierung wird die Reaktionsmischung 90 Minuten bei 80°C nachgeheizt, abgekühlt und bei unter 30°C über 180 µm-Filter abgelassen.

Einige Eigenschaften der Kolloiddispersionsmischung sind:

| | | |
|---|---|---|
| Feststoffgehalt | 30,3% | |
| K-Wert | 66 | |
| Partikelgrößenverteilung aus Mastersizer-Messung Volumen(Massen)-anteile: | | dv(10%) 0.127 µm |
| | | dv(50%) 0.418 µm |
| | | dv(90%) 1.623 µm |
| N-Vinyl-2-pyrrolidon | 600 ppm | |
| 2-Ethylhexylacrylat | < 25 ppm | |

### Beispiel 2

### Herstellung eines Schutzkolloids aus N-Vinylformamid und Dioctylmaleinat

1,6 g Natriumcarbonat und 16 g Arkopal N 308 (Nonylphenolpolyglykolether mit 30 EO, Clariant) werden in 500 g E-Wasser gelöst. Die Lösung wird auf 80°C erhitzt. Bei dieser Temperatur wird eine Mischung von 340,6 g N-Vinylformamid und 59,4 g Dioctylmaleinat über 180 Minuten dosiert. Parallel dazu dosiert man eine Lösung von 2 g Azo-bis-isobutyronitril in N-Vinylformamid. Nach Beendigung der Monomerdosierung wird die Reaktionsmischung 90 Minuten bei 80°C nachgeheizt. abgekühlt und bei unter 30°C über 180 µm-Filter abgelassen.

Einige Eigenschaften der Kolloiddispersionsmischung sind:

| | | |
|---|---|---|
| Feststoffgehalt | 34% | |
| K-Wert | 73,8 | |
| Partikelgrößenverteilung aus Mastersizer-Messung Volumen(Massen)-anteile: | | dv (10%) 0,322 µm |
| | | dv(50%) 0,715 µm, |
| | | dv(90%) 1,321 µm |
| N-Vinylformamid | < 0,1 | |
| Dioctylmaleinat | 1,4 | |

### Beispiel 3

### Herstellung einer Vina/VeoVa 10 Copolymerdispersion mit einem erfindungsgemäß eingesetzten Schutzkolloid

52,1 g der Kolloiddispersionsmischung von Beispiel 1, 40 g Arkopal N 308 (Nonylphenolpolyglykolether mit 30 EO, Clariant) und 3,3 g Natriumacetat werden in 788 g E-Wasser gelöst. Die Lösung wird langsam erhitzt. Währenddessen werden 10% einer Mischung von 720 g Vinylacetat (Vina) und 80 g Vinylversaticsäureester (VeoVa 10) zugegeben. Bei ca. 60°C werden 0,58 g Ammoniumpersulfat (APS) gelöst in 16 g E-Wasser zugegeben und bis auf 80°C aufgeheizt. Nach Anspringen der Polymerisation wird mit dem Dosieren von Monomischung und Initiator (1,6 g APS in 32 g Wasser) über 180 Minuten bei 80°C begonnen. 1 Stunde wird bei 80°C nachgeheizt. Anschließend wird auf Raumtemperatur abgekühlt und über 180 µm-Filter abgelassen.

| Einige Eigenschaften der Dispersion | |
|---|---|
| Feststoffgehalt | 49,0% |
| Siebrückstand (über 40 µm) | 0;03% |
| Teilchengröße: Argon-Aerosol [nm] (dw/dn) | 334; 1,54 |
| Brookfield-Viskosität (Spindel 5/20 UPM) | 12 Pa.s |
| WP/FR | 11/13°C |
| Fließgrenze | 16 Pa |

### Beispiel 4

### Herstellung einer Vina/Ethylen Copolymerdispersion mit einem erfindungsgemäß eingesetzten Schutzkolloid

845 g der Kolloiddispersionsmischung von Beispiel 1, 581 g Arkopal N 3,08 (Nonylphenolpolyglykolether mit 30 EO, Clariant), 47 g Natriumacetat, 61 g Natriumethensulfonat (30%) und 33,6 g Kaliumpersulfat werden in 10.880 g E-Wasser gelöst. Die Lösung wird im Reaktor unter Rühren dreimal mit Stickstoff überlagert. Bei 25°C werden 685 g Vinylacetat (Vina) zugegeben und der Ethylendruck auf 25 bar eingestellt. Die Lösung wird langsam erhitzt. Bei 67°C wird mit der Dosierung von 10.739 g Vinylacetat in 340 Minuten und der Redoxkomponenten (19,2 g Na2S205 in 360 g Wasser) über 370 Minuten begonnen. Nach Ende der Dosierung werden 11,2 g Natriumpersulfat in 480 g E-Wasser zugegeben und die Reaktionslösung wird 2 Stunden bei 85°C nachgeheizt. Anschließend wird auf Raumtemperatur abgekühlt und über 180 µm-Filter abgelassen.

| Einige Eigenschaften der Dispersion | |
|---|---|
| Feststoffgehalt | 51,2% |
| Siebrückstand (über 40 µm) | 0,03% |
| Teilchengröße: Argon-Aerosol [nm] | 331 |
| Brookfield-Viskosität (Spindel 5/20 UPM) | 6,8 Pa.s |
| Fließpunkt | 5,8 Pa |

## Patentansprüche

1. Verwendung einer Kolloiddispersionsmischung erhalten durch Copolymerisation eines wasserlöslichen Monomers mit einem nichtwasserlöslichen Comonomer in Gegenwart eines micellenbildenden Emulgators als Schutzkolloid für die Emulsionspolymerisation.

2. Verwendung nach Anspruch 1, **dadurch gekennzeichnet, dass** zur Herstellung der Kolloiddispersionsmischung als wasserlösliches Monomer N-Methyl-N-Vinylacetamid, N-Vinyl-2-pyrrolidon oder N-Vinylformamid eingesetzt wird.

3. Verwendung nach Anspruch 1, **dadurch gekennzeichnet, dass** zur Herstellung der Kolloiddispersionsmischung als nicht-wasserlösliches Comonomer ein unsubstituierter oder alpha-substituierter Ester der Acrylsäure oder ein Ester der Maleinsäure eingesetzt wird.

4. Verwendung nach Anspruch 2 und 3, **dadurch gekennzeichnet, dass** zur Herstellung der Kolloiddispersionsmischung als wasserlösliches Monomer N-Vinyl-2-pyrrolidon und als nicht-wasserlösliches Monomer ein Alkylester der Acrylsäure oder Methacrylsäure eingesetzt wird.

5. Verwendung nach Anspruch 3, **dadurch gekennzeichnet, dass** zur Herstellung der Kolloiddispersionsmischung als nicht-wasserlösliches Monomer Butyloder Ethylhexylacrylsäureester oder Dioctylmaleinat eingesetzt wird.

6. Verwendung nach einem der Ansprüche 1 bis 5, **dadurch gekennzeichnet, dass** zur Herstellung der Kolloiddispersionsmischung als Emulgatoren nichtionische Emulgatoren oder Mischungen aus ionischen mit nichtionischen Emulgatoren eingesetzt werden.

7. Verwendung nach einem der Ansprüche 1 bis 6, **dadurch gekennzeichnet, dass** zur Herstellung der Kolloiddispersionsmischung als Emulgatoren Alkylarylpolyglykolether oder Alkylpolyglykolether mit jeweils 3 bis 50 mol Ethylenoxid-Einheiten, Blockcopolymere des Ethylenoxids mit Propylenoxid, Alkyl- oder Alkylarylsulfonate, Alkylsulfate, Alkyl-und Arylethersulfate und - phosphate mit jeweils vorzugsweise 8 bis 18 Kohlenstoffatomen im lipophilen und bis zu 50 Ethylenoxid- oder Propylenoxid-Einheiten im hydrophilen Teil sowie Mono- oder Diester der Sulfobernsteinsäure oder Alkylphenole mit jeweils vorzugsweise 8 bis 18 Kohlenstoffatomen im Alkylrest eingesetzt werden.

8. Verwendung nach einem der Ansprüche 1 bis 7, **dadurch gekennzeichnet, dass** zur Herstellung der Kolloiddispersionsmischung die Copolymerisation als radikalische Polymerisation durchgeführt wird.

9. Verwendung nach Anspruch 8, **dadurch gekennzeichnet, dass** zur Herstellung der Kolloiddispersionsmischung die Copolymerisation bei 60 bis 90°C durchgeführt wird.

10. Verwendung nach einem der Ansprüche 1 bis 9, **dadurch gekennzeichnet, dass** die Kolloiddispersionsmischung als Schutzkolloid für Emulsionspolymerisation von homo- oder copolymeren Polyvinylestern eingesetzt wird, wobei die Vinylester ausgewählt werden aus der Gruppe bestehend aus Vinylformiat, Vinylacetat, Vinylpropionat, Vinylisobutyrat, Vinylpivalat, Vinyl-2-ethylhexanoat, Vinylester von gesättigten, verzweigten Monocarbonsäuren mit 9 bis 10 Kohlenstoffatomen im Säurerest, Vinylester von längerkettigen, gesättigten oder ungesättigten Fettsäuren, Vinylester der Benzoesäure und Vinylester substituierter Derivate der Benzoesäure, wobei der Anteil dieser Vinylester im Polymerisat mindestens 50 Gew.-% beträgt.

11. Verwendung gemäß einem der Ansprüche 1 bis 10, **dadurch gekennzeichnet, dass** der Anteil des Schutzkolloids 0,1 bis 5 Gew.-% (bezogen auf die Gesamtmonomerenmenge) beträgt.

12. Verwendung gemäß einem der Ansprüche 1 bis 11, **dadurch gekennzeichnet, dass** die Kolloiddispersionsmischung ein Copolymer aus N-Vinyl-2-pyrrolidon und 2-Ethylhexylacrylat oder ein Copolymer aus N-Vinylformamid und Dioctylmaleinat enthält.

13. Verfahren zur Herstellung homo- oder copolymeren Polyvinylestern durch Emulsionspolymerisation, wobei die Vinylester ausgewählt werden aus der Gruppe bestehend aus Vinylformiat, Vinylacetat, Vinylpropionat, Vinylisobutyrat, Vinylpivalat, Vinyl-2-ethylhexanoat, Vinylester von gesättigten, verzweigten Monocarbonsäuren mit 9 bis 10 Kohlenstoffatomen im Säurerest, Vinylester von längerkettigen, gesättigten oder ungesättigten Fettsäuren, Vinylester der Benzoesäure und Vinylester substituierter Derivate der Benzoesäure und wobei der Anteil dieser Vinylester im Polymerisat mindestens 50 Gew.% beträgt, **dadurch gekennzeichnet, dass** als Schutzkolloid bei der Emulsionspolymerisation eine Kolloiddispersionsmischung eingesetzt wird, die erhalten wurde durch Copolymerisation eines wasserlösliche Monomers mit einem nichtwasserföslichen Comonomer in Gegenwart eines micellenbildenden Emulgators.

14. Verfahren nach Anspruch 13, **dadurch gekennzeichnet, dass** der Vinylester Vinylacetat ist.

15. Verfahren nach Anspruch 13, **dadurch gekennzeichnet, dass** weitere ethylenisch ungesättigte Monomere, die mit Vinylestern copolymerisiert werden können, eingesetzt werden, die ausgewählt sind aus der Gruppe bestehend aus α,β-ungesättigten Säuren, insbesondere Acrylsäure und/oder Methacrylsäure, sowie Estem α,β-ungesättigter Säuren mit primären und sekundären gesättigten einwertigen Alkoholen mit ein bis achtzehn Kohlenstoffatomen, α,β-ungesättigten Dicarbonsäuren, insbesondere Maleinsäure, Fumarsäure, Itaconsäure oder Citraconsäure, und Mono- oder Diestem α,β-ungesättigter Dicarbonsäuren mit gesättigten einwertigen aliphatischen Alkoholen mit ein bis achtzehn Kohlenstoffatomen, wobei der Anteil dieser Comonomeren an der Gesamtmonomerenmenge bis zu 25 Gew.-% beträgt.

16. Verfahren nach Anspruch 13, **dadurch gekennzeichnet, dass** weitere ethylenisch ungesättigte Monomere, die mit Vinylestern copolymerisiert werden können, eingesetzt werden, die ausgewählt sind aus der Gruppe bestehend aus ethylenisch ungesättigten Kohlenwasserstoffen, insbesondere Ethylen oder atpha-Olefinen mit drei bis achtzehn Kohlenstoffatomen, Styrol, Vinyltoluol, Vinylxylol, und halogenierten ungesättigten aliphatischen Kohlenwasserstoffen, insbesondere Vinylchlorid, Vinylfluorid, Vinylidenchlorid und/oder Vinylidenfluorid, wobei der Anteil dieser Comonomeren an der Gesamtmonomerenmenge bis zu 50 Gew.-% beträgt.

17. Verfahren nach Anspruch 13, **dadurch gekennzeichnet, dass** weitere ethylenisch ungesättigte Monomere, die mit Vinylestem copolymerisiert werden können, eingesetzt werden, die ausgewählt sind aus der Gruppe bestehend aus Diallylphthalat, Diallylmaleinat, Triallylcyanurat, Tetraallyloxyethan, Divinylbenzol, Butandiol-1,4-dimethacrylat, Triethylenglykoldimethacrylat, Divinyladipat, Allyl(meth)acrylat, Vinylcrotonat, Methylenbisacrylamid, Hexandioldiacrylat, Pentaerythritoldiacrylat und Trimethylolpropantriacrylat, wobei der Anteil dieser Comonomeren an der Gesamtmonomerenmenge bis zu 10 Gew.% beträgt.

18. Verfahren nach Anspruch 13, **dadurch gekennzeichnet, dass** weitere ethylenisch ungesättigte Monomere, die mit Vinylestem copolymerisiert werden können, eingesetzt werden, die ausgewählt werden aus der Gruppe bestehend aus stickstoffhaltigen Comonomere mit N-funküonellen Gruppen, insbesondere (Meth)acrylamid, Allylcarbamat, Acrylnitril, N-methylol(meth)acrylamid, N-Methylolallylcarbamat sowie die N-Methylolester, N-Methylolalkylether oder Mannichbasen des N-Methylol(meth)acrylamids oder N-Methylolallylcarbamats, Acrylamidoglykolsäure, Acrylamidomethoxyessigsäuremethylester, N-(2,2-Dimethoxyhydroxyethyl)acrylamid, N-Dimethylaminopropyl(meth)acrylamid, N-Methyl(meth)acrylamid, N-Butyl(meth)acrylamid, N-Cyclohexyl(meth)acrylamid, N-Dodecyl(meth)acrylamid, N-Benzyl(meth)acrylamid, p-Hydroxyphenyl(meth)acrylamid, N-(3-Hydroxy-2,2-dimethylpropyl)methacrylamid, Ethylimidazolidonmethacrylat, N-Vinylformamid, und N-Vinyl-2-pyrrolidon, wobei der Anteil dieser Comonomeren an der Gesamtmonomerenmenge bis zu 15 Gew.% beträgt.

19. Verfahren nach Anspruch 13, **dadurch gekennzeichnet, dass** weitere ethylenisch ungesättigte Monomere, die mit Vinylestern copolymerisiert werden können, eingesetzt werden, die hydroxyfunktionelle Monomere sind, insbesondere Hydroxyethyl(meth)acrylat, Hydroxypropyl(meth)acrylat sowie deren Addukte mit Ethylenoxid oder Propylenoxid, wobei der Anteil dieser Comonomeren an der Gesamtmonomerenmenge bis zu 25 Gew.-% beträgt.

20. Verfahren nach Anspruch 13, **dadurch gekennzeichnet, dass** weitere ethylenisch ungesättigte Monomere, die mit Vinylestern copolymerisiert werden können, eingesetzt werden, die ausgewählt werden aus der Gruppe bestehend aus Diacetonacrylamid, Allylacetoacetat, Vinylacetoacetat und Acetoacetoxyethyl(meth)acrylat, wobei der Anteil dieser Comonomeren an der Gesamtmonomerenmenge bis zu 10 Gew.-% beträgt.

## Claims

1. The use of a colloid dispersion mixture obtained by copolymerizing a water-soluble monomer with a water-insoluble comonomer in the presence of a micelle-forming emulsifier as a protective colloid for emulsion polymerization.

2. The use as claimed in claim 1, wherein N-methyl-N-vinylacetamide, N-vinyl-2-pyrrolidone or N-vinylformamide is employed as water-soluble monomer to prepare the colloid dispersion mixture.

3. The use as claimed in claim 1 or 2, wherein an unsubstituted or alpha-substituted ester of acrylic acid or an ester of maleic acid is employed as water-insoluble comonomer to prepare the colloid dispersion mixture.

4. The use as claimed in claim 2 or 3, wherein N-vinyl-2-pyrrolidone is employed as water-soluble monomer and an alkyl ester of acrylic or methacrylic acid is employed as water-insoluble monomer to prepare the colloid dispersion mixture.

5. The use as claimed in claim 3 or 4, wherein butyl or ethylhexyl acrylate or dioctyl maleate is employed as water-insoluble monomer to prepare the colloid dispersion mixture.

6. The use as claimed in one of claims 1 to 5, wherein nonionic emulsifiers or mixtures of ionic with nonionic emulsifiers are employed as emulsifiers to prepare the colloid dispersion mixture.

7. The use as claimed in one of claims 1 to 6, wherein alkylaryl polyglycol ethers or alkyl polyglycol ethers each having from 3 to 50 mol of ethylene oxide units, block copolymers of ethylene oxide with propylene oxide, alkylsulfonates or alkylarylsulfonates, alkyl sulfates, alkyl and aryl ether sulfates and phosphates each having preferably 8 to 18 carbon atoms in the lipophilic portion and up to 50 ethylene oxide or propylene oxide units in the hydrophilic portion, and also mono- or diesters of sulfosuccinic acid, or alkylphenols having in each case preferably 8 to 18 carbon atoms in the alkyl radical, are employed as emulsifiers to prepare the colloid dispersion mixture.

8. The use as claimed in one of claims 1 to 7, wherein the copolymerization is conducted as a free-radical addition polymerization to prepare the colloid dispersion mixture.

9. The use as claimed in claim 8, wherein the copolymerization is conducted at from 60 to 90°C to prepare the colloid dispersion mixture.

10. The use as claimed in one of claims 1 to 9, wherein the colloid dispersion mixture is used as a protective colloid for emulsion polymerization of homo- or copolymeric polyvinyl esters, the vinyl esters being selected from the group consisting of vinyl formate, vinyl acetate, vinyl propionate, vinyl isobutyrate, vinyl pivalate, vinyl 2-ethylhexanoate, vinyl esters of saturated branched monocarboxylic acids having 9 or 10 carbon atoms in the acid residue, vinyl esters of relatively long-chain, saturated or unsaturated fatty acids, vinyl esters of benzoic acid and vinyl esters of substituted derivatives of benzoic acid, the proportion of said vinyl esters in the polymer being at least 50% by weight.

11. The use as claimed in one of claims 1 to 10, wherein the proportion of the protective colloid is from 0.1 to 5% by weight (based on the overall monomer amount).

12. The use as claimed in one of claims 1 to 11, wherein the colloid dispersion mixture comprises a copolymer of N-vinyl-2-pyrrolidone and 2-ethylhexyl acrylate or a copolymer of N-vinylformamide and dioctyl maleate.

13. A process for preparing homo- or copolymeric polyvinyl esters by emulsion polymerization, the vinyl esters being selected from the group consisting of vinyl formate, vinyl acetate, vinyl propionate, vinyl isobutyrate, vinyl pivalate, vinyl 2-ethylhexanoate, vinyl esters of saturated branched monocarboxylic acids having 9 or 10 carbon atoms in the acid residue, vinyl esters of relatively long-chain, saturated or unsaturated fatty acids, vinyl esters of benzoic acid and vinyl esters of substituted derivatives of benzoic acid, the proportion of said vinyl esters in the polymer being at least 50% by weight, which comprises using as protective colloid in the emulsion polymerization a colloid dispersion mixture obtained by copolymerizing a water-soluble monomer with a water-insoluble comonomer in the presence of a micelle-forming emulsifier.

14. The process as claimed in claim 13, wherein the vinyl ester is vinyl acetate.

15. The process as claimed in claim 13, wherein further ethylenically unsaturated monomers which can be copolymerized with vinyl esters are used, selected from the group consisting of α,β-unsaturated acids, especially acrylic acid and/or methacrylic acid, and also esters of α,β-unsaturated acids with primary and secondary saturated monohydric alcohols having one to eighteen carbon atoms, of α,β-unsaturated dicarboxylic acids, especially maleic acid, fumaric acid, itaconic acid or citraconic acid, and mono- or diesters of α,β-unsaturated dicarboxylic acids with saturated monohydric aliphatic alcohols having one to eighteen carbon atoms, the proportion of the overall monomer amount accounted for by these comonomers being up to 25% by weight.

16. The process as claimed in claim 13, wherein further ethylenically unsaturated monomers which can be copolymerized with vinyl esters are used, selected from the group consisting of ethylenically unsaturated hydrocarbons, especially ethylene or alpha-olefins having three to eighteen carbon atoms, styrene, vinyltoluene, vinylxylene, and halogenated unsaturated aliphatic hydrocarbons, especially vinyl chloride, vinyl fluoride, vinylidene chloride and/or vinylidene fluoride, the proportion of the overall monomer amount accounted for by these comonomers being up to 50% by weight.

17. The process as claimed in claim 13, wherein further ethylenically unsaturated monomers which can be copolymereized with vinyl esters are used, selected from the group consisting of diallyl phthalate, diallyl maleate, triallyl cyanurate, tetraallyloxyethane, divinylbenzene, 1,4-butanediol dimethacrylate, triethylene glycol dimethacrylate, divinyl adipate, allyl (meth)acrylate, vinyl crotonate, methylenebisacrylamide, hexanediol diacrylate, pentaerythritol diacrylate and trimethylolpropane triacrylate, the proportion of the overall monomer amount accounted for by these comonomers being up to 10% by weight.

18. The process as claimed in claim 13, wherein further ethylenically unsaturated monomers which can be copolymerized with vinyl esters are used, selected from the group consisting of nitrogen-containing comonomers with N-functional groups, especially (meth)acrylamide, allyl carbamate, acrylonitrile, N-methylol(meth)acrylamide, N-methylolallyl carbamate and also the N-methylol esters, N-methylol alkyl ethers or Mannich bases of N-methylol(meth)acrylamide or N-methylolallyl carbamate, acrylamidoglycolic acid, methyl acrylamidomethoxyacetate, N-(2,2-dimethoxyhydroxyethyl)acrylamide, N-dimethylaminopropyl(meth)-acrylamide, N-methyl(meth)acrylamide, N-butyl-(meth)acrylamide, N-cyclohexyl(meth)acrylamide, N-dodecyl(meth)acrylamide, N-benzyl(meth)-acrylamide, p-hydroxyphenyl(meth)acrylamide, N-(3-hydroxy-2,2-dimethylpropyl)methacrylamide, ethyl imidazolidonemethacrylate, N-vinylformamide and N-vinyl-2-pyrrolidone, the proportion of the overall monomer amount accounted for by these comonomers being up to 15% by weight.

19. The process as claimed in claim 13, wherein further ethylenically unsaturated monomers which can be copolymerized with vinyl esters are used, these being hydroxy-functional monomers, especially hydroxyethyl (meth)acrylate, hydroxypropyl (meth)acrylate and adducts thereof with ethylene oxide or propylene oxide, the proportion of the overall monomer amount accounted for by these comonomers being up to 25% by weight.

20. The process as claimed in claim 13, wherein further ethylenically unsaturated monomers which can be copolymerized with vinyl esters are used, selected from the group consisting of diacetoneacrylamide, allyl acetoacetate, vinyl acetoacetate and acetoacetoxyethyl (meth)acrylate, the proportion of the overall monomer amount accounted for by these comonomers being up to 10% by weight.

## Revendications

1. Utilisation d'un mélange en dispersion colloïdale obtenu par copolymérisation d'un monomère soluble dans l'eau avec un comonomère insoluble dans l'eau en présence d'un émulsifiant formant des micelles, en tant que colloïde protecteur pour une polymérisation en émulsion.

2. Utilisation selon la revendication 1, **caractérisée en ce que**, pour préparer le mélange du dispersion colloïdale, on utilise en tant que monomère soluble dans l'eau le N-méthyl-N-vinylacétamide, la N-vinyl-2-pyrrolidone ou le N-vinylformamide.

3. Utilisation selon la revendication 1, **caractérisée en ce que**, pour préparer le mélange en dispersion colloïdale, on utilise en tant que comonomère insoluble dans l'eau un ester non substitué ou alphasubstitué de l'acide acrylique ou un ester de l'acide maléique.

4. Utilisation selon les revendications 2 et 3, **caractérisée en ce que**, pour préparer le mélange en dispersion colloïdale, on utilise en tant que monomère soluble dans l'eau la N-vinyl-2-pyrrolidone et, en tant que monomère insoluble dans l'eau, un ester alkylique de l'acide acrylique ou de l'acide méthacrylique.

5. Utilisation selon la revendication 3, **caractérisée en ce que**, pour préparer le mélange en dispersion colloïdale, on utilise en tant que monomère insoluble dans l'eau l'acrylate de butyle ou d'éthylhexyle, ou le maléate de dioctyle.

6. Utilisation selon l'une des revendications 1 à 5, **caractérisée en ce que**, pour préparer le mélange en dispersion colloïdale, on utilise en tant qu'émulsifiants des émulsifiants non ioniques ou des mélanges d'émulsifiants ioniques et d'émulsifiants non ioniques.

7. Utilisation selon l'une des revendications 1 à 6, **caractérisée en ce que**, pour préparer le mélange en dispersion colloïdale, on utilise en tant qu'émulsifiants des alkylarylpolyglycoléthers ou des alkylpolyglycoléthers ayant chacun de 3 à 50 moles d'oxyde d'éthylène, des copolymères à blocs d'oxyde d'éthylène et d'oxyde de propylène, des alkyl- ou des alkylarylsulfonates, des alkylsulfates, des alkyl- et aryléthersulfates et -phosphates ayant chacun de préférence de 8 à 18 atomes de carbone dans la partie lipophile et jusqu'à 50 motifs oxyde d'éthylène ou oxyde de propylène dans la partie hydrophile, ainsi que les mono- ou diesters de l'acide sulfosuccinique, ou des alkylphénols ayant chacun de préférence de 8 à 18 atomes de carbone dans le fragment alkyle.

8. Utilisation selon l'une des revendications 1 à 7, **caractérisée en ce que**, pour préparer le mélange en dispersion colloïdale, on met en oeuvre la copolymérisation sous forme d'une polymérisation radicalaire.

9. Utilisation selon la revendication 8, **caractérisée en ce que**, pour préparer le mélange en dispersion colloïdale, on met en oeuvre la copolymérisation à une température de 60 à 90°C.

10. Utilisation selon l'une des revendications 1 à 9, pour laquelle on utilise le mélange en dispersion colloïdale en tant que colloïde protecteur pour une polymérisation en émulsion d'homopolymères ou de copolymères d'esters vinyliques, les esters vinyliques étant choisis dans le groupe consistant en le formiate de vinyle, l'acétate de vinyle, le propionate de vinyle, l'isobutyrate de vinyle, le pivalate de vinyle, le 2-éthylhexanoate de vinyle, les esters vinyliques d'acides monocarboxyliques ramifiés saturés ayant de 9 à 10 atomes de carbone dans le fragment acide, les esters vinyliques d'acides gras à longue chaîne, saturés ou insaturés, les esters vinyliques de l'acide benzoïque et les dérivés substitués des esters vinyliques de l'acide benzoïque, la proportion de ces esters vinyliques dans le polymère étant d'au moins 50 % en poids.

11. Utilisation selon l'une des revendication 1 à 10, **caractérisée en ce que** le proportion du colloïde protecteur est de 0,1 à 5 % en poids par rapport à la quantité totale des monomères.

12. Utilisation selon l'une des revendications 1 à 11, **caractérisée en ce que** le mélange en dispersion colloïdale contient un copolymère de N-vinyl-2-pyrrolidone et d'acrylate de 2-éthylhexyle ou un copolymère de N-vinylformamide et de maléate de dioctyle.

13. Procédé de préparation d'homopolymères ou de copolymères d'esters vinyliques par polymérisation en émulsion, les esters vinyliques étant choisis dans le groupe consistant en le formiate de vinyle, l'acétate de vinyle, le propionate de vinyle, l'isobutyrate de vinyle, le pivalate de vinyle, le 2-éthylhexanoate de vinyle, les esters vinyliques d'acides monocarboxyliques ramifiés saturés ayant de 9 à 10 atomes de carbone dans le fragment acide, les esters vinyliques d'acides gras à longue chaîne, saturés ou insaturés, les esters vinyliques de l'acide benzoïque et les dérivés substitués des esters vinyliques de l'acide benzoïque, la proportion de ces esters vinyliques dans le copolymère étant d'au moins 50 % en poids, **caractérisé en ce qu'**on utilise en tant que colloïde protecteur lors de la polymérisation en émulsion un mélange en dispersion colloïdale que l'on a obtenu par copolymérisation d'un monomère soluble dans l'eau avec un comonomère insoluble dans l'eau en présence d'un émulsifiant formant des micelles.

14. Procédé selon la revendication 13, **caractérisé en ce que** l'ester vinylique est l'acétate de vinyle.

15. Procédé selon la revendication 13, **caractérisé en ce qu'**on utilise d'autres monomères à insaturation éthylénique, qui peuvent être copolymérisés avec des esters vinyliques, qui sont choisis dans le groupe consistant en les acides α,β-insaturés, en particulier l'acide acrylique et/ou l'acide méthacrylique, ainsi que les esters d'acides α,β-insaturés et de monoalcools saturés primaires et secondaires ayant de 1 à 18 atomes de carbone, les acides dicarboxyliques α,β-insaturés, notamment l'acide maléique, l'acide fumarique, l'acide itaconique ou l'acide citraconique, et les mono- ou diesters d'acides dicarboxyliques α,β-insaturés et de monoalcools aliphatiques saturés ayant de 1 à 18 atomes de carbone, la proportion de ces comonomères, par rapport à la quantité totale des monomères, pouvant aller jusqu'à 25 % en poids.

16. Procédé selon la revendication 13, **caractérisé en ce qu'**on utilise d'autres monomères à insaturation éthylénique, qui peuvent être copolymérisés avec des esters vinyliques, qui sont choisis dans le groupe consistant en les hydrocarbures à insaturation éthylénique, en particulier l'éthylène ou les α-oléfines ayant de 3 à 18 atomes de carbone, le styrène, le vinyltoluène, le vinylxylène, et les hydrocarbures aliphatiques insaturés halogénés, notamment le chlorure de vinyle, le fluorure de vinyle, le chlorure de vinylidène et/ou le fluorure de vinylidène, la proportion de ces comonomères, rapportée à la quantité totale des monomères, pouvant aller jusqu'à 50 % en poids.

17. Procédé selon la revendication 13, **caractérisé en ce qu'**on utilise d'autres monomères à insaturation éthylénique, pouvant être copolymérisés avec des esters vinyliques, qui sont choisis dans le groupe consistant en le phtalate de diallyle, le maléate de diallyle, le cyanurate de triallyle, le tétraallyloxyéthane, le divinylbenzène, le diméthacrylate de butanediol-1,4, le diméthacrylate de triéthylèneglycol, l'adipate de divinyle, le (méth)acrylate d'allyle, le crotonate de vinyle, le méthylènebisacrylamide, le diacrylate d'hexanediol, le diacrylate de pentaérythritol et le triacrylate de triméthylolpropane, la proportion de ces comonomères, rapportée à la quantité totale des monomères, pouvant aller jusqu'à 10 % en poids.

18. Procédé selon la revendication 13, **caractérisé en ce qu'**on utilise d'autres monomères à insaturation éthylénique, qui peuvent être copolymérisés avec des esters vinyliques, qui sont choisis dans le groupe consistant en les comonomères azotés comportant des groupes N-fonctionnels, en particulier le (méth)acrylamide, le carbamate d'allyle, l'acrylonitrile, le N-méthylol(méth)-acrylamide, le carbamate de N-méthylolallyle, ainsi que les esters du N-méthylol, les éthers alkyliques du N-méthylol ou les bases de Mannich du N-méthylol(méth)-acrylamide ou de l'allylcarbamate de N-méthylol, l'acide acrylamidoglycolique, l'ester méthylique de l'acide acrylamidométhoxyacétique, le N-(2,2-diméthoxy-1-hydroxyéthyl)-acrylamide, le N-diméthylaminopropyl(méth)-acrylamide, le N-méthyl(méth)acrylamide, le N-butyl(méth)-acrylamide, le N-cyclohexyl(méth)acrylamide, le N-dodécyl-(méth)acrylamide, le N-benzyl(méth)acrylamide, le p-hydroxyphényl(méth)acrylamide, le N-(3-hydroxy-2,2-diméthylpropyl)méthacrylamide, le méthacrylate d'éthylimidazolidone, le N-vinylformamide, la N-vinyl-2-pyrrolidone, la proportion de ces comonomères, par rapport à la quantité totale des monomères, pouvant aller jusqu'à 15 % en poids.

19. Procédé selon la revendication 13, **caractérisé en ce qu'**on utilise d'autres monomères à insaturation éthylénique, qui peuvent être copolymérisés avec des esters vinyliques, qui sont des monomères hydroxylés, en particulier le (méth)acrylate d'hydroxyéthyle, le (méth)-acrylate d'hydroxypropyle ainsi que leurs adduits avec l'oxyde d'éthylène ou l'oxyde de propylène, la proportion de ces comonomères, par rapport à la quantité totale des monomères, pouvant aller jusqu'à 25 % en poids.

20. Procédé selon la revendication 13, **caractérisé en ce qu'**on utilise d'autres monomères à insaturation éthylénique, qui peuvent être copolymérisés avec des esters vinyliques, qui sont choisis dans le groupe consistant en le diacétonacrylamide, l'acétoacétate d'allyle, l'acétoacétate de vinyle, le (méth)acrylate d'acétoacétoxyéthyle, la proportion de ces comonomères, par rapport à la quantité totale des monomères, pouvant aller jusqu'à 10 % en poids.
